(19)

**Europäisches Patentamt**
**European Patent Office**
**Office européen des brevets**

(11)     **EP 4 650 587 A1**

(12)                    **EUROPEAN PATENT APPLICATION**
published in accordance with Art. 153(4) EPC

(43) Date of publication:
**19.11.2025   Bulletin 2025/47**

(21) Application number: **23919653.8**

(22) Date of filing: **31.01.2023**

(51) International Patent Classification (IPC):
*F02F 5/00* (2006.01)

(52) Cooperative Patent Classification (CPC):
**F02F 5/00**

(86) International application number:
**PCT/JP2023/003086**

(87) International publication number:
**WO 2024/161511 (08.08.2024 Gazette 2024/32)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Kabushiki Kaisha Riken
Tokyo 102-8202 (JP)**

(72) Inventor: **IIJIMA, Naoki
Kashiwazaki-shi, Niigata 945-8555 (JP)**

(74) Representative: **Arnold & Siedsma
Bezuidenhoutseweg 57
2594 AC The Hague (NL)**

(54)     **SLIDING MECHANISM**

(57)     A sliding mechanism is a sliding mechanism between a piston and an inner peripheral surface of a cylinder, to be applied to an engine configured to conduct a temporary stop automatically. A lubricating oil of the engine contains an organomolybdenum-based friction modifier. The sliding mechanism includes an oil ring having an annular shape and a pair of outer peripheral surfaces. Each of the pair of outer peripheral surfaces of the oil ring includes a curved surface having a cross-sectional shape curving convexly outward in a radial direction. A vertex that is a radially outermost point of the curved surface of the oil ring is disposed at a central portion of the outer peripheral surface of the oil ring in an axial direction of the oil ring, and the curved surface of the oil ring forms an arcuate surface passing through a pair of points each spaced apart from the vertex of the oil ring by 0.075 mm on both sides in the axial direction of the oil ring and positioned inward in the radial direction at a drop of 10 μm or more.

**Fig.1**

EP 4 650 587 A1

## Description

## Technical Field

The present disclosure relates to a sliding mechanism, and particularly to a sliding mechanism between a piston and an inner peripheral surface of a cylinder, to be applied to an engine configured to conduct a temporary stop automatically.

## Background Art

In sliding components used in automobiles and the like, an ion plating film such as chromium nitride (CrN, Cr2N), titanium nitride (TiN), or chromium carbide (CrC), a DLC film, or the like is sometimes formed on a sliding portion by a film formation method such as a PVD method or a CVD method to improve wear resistance. It is also known that adding a friction modifier such as MoDTC or MoDTP to a lubricating oil used for a sliding portion can achieve friction reduction and improvement in wear resistance (see, for example, Patent Literature 1 and Patent Literature 2).

## Citation List

## Patent Literature

Patent Literature 1: Japanese National Phase PCT Patent Publication No. 2014-532841
Patent Literature 2: Japanese Unexamined Patent Publication No. 2018-150434

## Summary of Invention

## Technical Problem

In recent years, in automobiles and the like, the adoption of engines configured to conduct a temporary stop automatically, such as engines having an idling stop function and engines mounted on hybrid vehicles, has been increasing. Also, there is a trend to adopt low-viscosity lubricating oil for fuel efficiency improvement, and an oil film tends to become thin on an inner peripheral surface of a cylinder with which an outer peripheral surface of a piston ring is in sliding contact. In such an engine, as the number of temporary stops and starts of the engine increases, the frequency with which the piston sliding speed becomes low increases, and thus the frequency with which the lubrication state between the outer peripheral surface of the piston ring and the inner peripheral surface of the cylinder becomes boundary lubrication (solid lubrication) increases. However, reduction in friction and wear in a situation where the piston sliding speed is low has not been relatively focused on compared to a situation where the piston sliding speed is not low in the related art, and there has been room for improvement.

An object of the present disclosure is to provide a sliding mechanism capable of achieving reduction in friction and wear in a situation where the piston sliding speed is low.

## Solution to Problem

In order to solve the above problem, the present inventor has conducted intensive studies. As a result, the inventor has found a shape of an outer peripheral surface of a piston ring that is effective for reduction in friction and wear even in a situation where the piston sliding speed is low, when a lubricating oil of an engine containing an organomolybdenum-based friction modifier is used in a sliding mechanism between a piston and an inner peripheral surface of a cylinder, to be applied to an engine configured to conduct a temporary stop automatically.

A sliding mechanism according to one aspect of the present disclosure is a sliding mechanism between a piston and an inner peripheral surface of a cylinder, to be applied to an engine configured to conduct a temporary stop automatically. A lubricating oil of the engine contains an organomolybdenum-based friction modifier. The sliding mechanism includes a plurality of piston rings to be installed respectively in a plurality of ring grooves of the piston. The plurality of piston rings include a compression ring having an annular shape and an oil ring having an annular shape. Each of a pair of outer peripheral surfaces of the oil ring includes a curved surface having a cross-sectional shape curving convexly outward in a radial direction. A vertex that is a radially outermost point of the curved surface of the oil ring is disposed at a central portion of the outer peripheral surface of the oil ring in an axial direction of the oil ring. The curved surface of the oil ring forms an arcuate surface passing through a pair of points each spaced apart from the vertex of the oil ring by 0.075 mm on both sides in the axial direction of the oil ring and positioned inward in the radial direction at a drop of 10 $\mu$m or more; and an outer peripheral surface of the compression ring is configured as in (1) or (2) below:

(1) the outer peripheral surface of the compression ring protrudes outward in the radial direction, and a vertex that is a radially outermost point of the outer peripheral surface of the compression ring is disposed on a side of bottom dead center of the piston relative to a central portion of the outer peripheral surface of the compression ring in an axial direction of the compression ring.

(2) the outer peripheral surface of the compression ring includes a curved surface having a cross-sectional shape curving convexly outward in the radial direction, a vertex that is a radially outermost point of the curved surface of the compression ring is disposed at a central portion of the outer peripheral surface of the compression ring or on a side of bottom dead center of the piston relative to the central portion of the compression ring in an axial direction of the compression ring, and the curved surface of the compression ring forms an arcuate surface passing through a pair of points each spaced apart from the vertex of the compression ring by 0.3 mm on both sides in the axial direction of the compression ring and positioned inward in the radial direction at a drop of 2 $\mu$m or more.

In the sliding mechanism according to one aspect of the present disclosure, the outer peripheral surface of the oil ring and the outer peripheral surface of the compression ring are configured in a shape that makes it easy to scrape off the lubricating oil on the inner peripheral surface of the cylinder and makes the oil film thin in a situation where the piston sliding speed is high and the proportion of the fluid lubrication region is large during engine operation. With such shapes of the outer peripheral surface of the oil ring and the outer peripheral surface of the compression ring, the lubrication state at the sliding contact portion between the outer peripheral surface of the piston ring and the inner peripheral surface of the cylinder is likely to become boundary lubrication, and minute contact between the outer peripheral surface of the piston ring and the inner peripheral surface of the cylinder is likely to increase. As a result, frictional heat increases at the sliding contact portion, and film-like molybdenum disulfide or the like is likely to be formed from the organomolybdenum-based friction modifier. Therefore, in a sliding mechanism between a piston and an inner peripheral surface of a cylinder, to be applied to an engine configured to conduct a temporary stop automatically, when a lubricating oil of the engine containing an organomolybdenum-based friction modifier is used, it is possible to achieve reduction in friction and wear even in a situation where the piston sliding speed is low.

In one embodiment, a chromium-containing film may be formed on the outer peripheral surface of the compression ring and the outer peripheral surface of the oil ring. In this case, due to the presence of chromium, the phenomenon in which film-like molybdenum disulfide or the like is formed from the organomolybdenum-based friction modifier at the sliding contact portion is more likely to be exhibited.

In one embodiment, a total surface pressure of the plurality of piston rings against the inner peripheral surface of the cylinder may be 0.85 MPa or more and 5.5 MPa or less. In this case, since the oil film on the inner peripheral surface of the cylinder becomes thinner compared to the case where the total surface pressure is less than 0.85 MPa, the phenomenon in which film-like molybdenum disulfide or the like is formed from the organomolybdenum-based friction modifier at the sliding contact portion is more likely to be exhibited.

In one embodiment, a composite roughness between the outer peripheral surface of the compression ring, the outer peripheral surface of the oil ring, and the inner peripheral surface of the cylinder may be Ra 0.1 $\mu$m or more. In this case, since minute contact between the outer peripheral surface of the piston ring and the inner peripheral surface of the cylinder is more likely to increase compared to the case where the composite roughness is less than Ra 0.1 $\mu$m, frictional heat is more likely to be generated, and the phenomenon in which film-like molybdenum disulfide or the like is formed from the organomolybdenum-based friction modifier at the sliding contact portion is more likely to be exhibited.

A sliding mechanism according to another aspect of the present disclosure is a sliding mechanism between a piston and an inner peripheral surface of a cylinder, to be applied to an engine configured to conduct a temporary stop automatically. A lubricating oil of the engine contains an organomolybdenum-based friction modifier. The sliding mechanism includes a plurality of piston rings to be installed respectively in a plurality of ring grooves of the piston. The plurality of piston rings include a compression ring having an annular shape, the compression ring having an outer peripheral surface configured as in (1) or (2) below:

(1) the outer peripheral surface of the compression ring protrudes outward in the radial direction, and a vertex that is a radially outermost point of the outer peripheral surface of the compression ring is disposed on a side of bottom dead center of the piston relative to a central portion of the outer peripheral surface of the compression ring in an axial direction of the compression ring.

(2) the outer peripheral surface of the compression ring includes a curved surface having a cross-sectional shape curving convexly outward in the radial direction, a vertex that is a radially outermost point of the curved surface of the compression ring is disposed at a central portion of the outer peripheral surface of the compression ring or on a side of bottom dead center of the piston relative to the central portion of the compression ring in an axial direction of the compression ring, and the curved surface of the compression ring forms an arcuate surface passing through a pair of points each spaced apart from the vertex of the compression ring by 0.3 mm on both sides in the axial direction of the compression ring and positioned inward in the radial direction at a drop of 2 $\mu$m or more.

In the sliding mechanism according to another aspect of the present disclosure, the outer peripheral surface and the vertex of the compression ring are configured in a shape that makes it easy to scrape off the lubricating oil on the inner peripheral surface of the cylinder and makes the oil film thin in a situation where the piston sliding speed is high and the proportion of the fluid lubrication region is large during engine operation. With such a shape of the outer peripheral surface of the compression ring, the lubrication state at the sliding contact portion between the outer peripheral surface of the piston ring and the inner peripheral surface of the cylinder is likely to become boundary lubrication, and minute contact between the outer peripheral surface of the piston ring and the inner peripheral surface of the cylinder is likely to increase. As a result, frictional heat increases at the sliding contact portion, and film-like molybdenum disulfide or the like is likely to be formed from the organomolybdenum-based friction modifier. Therefore, in a sliding mechanism between a piston and an inner peripheral surface of a cylinder, to be applied to an engine configured to conduct a temporary stop automatically, when a lubricating oil of the engine containing an organomolybdenum-based friction modifier is used, it is possible to achieve reduction in friction and wear even in a situation where the piston sliding speed is low.

A sliding mechanism according to still another aspect of the present disclosure is a sliding mechanism between a piston and an inner peripheral surface of a cylinder, to be applied to an engine configured to conduct a temporary stop automatically. A lubricating oil of the engine contains an organomolybdenum-based friction modifier. The sliding mechanism includes a plurality of piston rings installed respectively in a plurality of ring grooves of the piston. The plurality of piston rings include an oil ring having an annular shape, the oil ring having a pair of outer peripheral surfaces. Each of the pair of outer peripheral surfaces of the oil ring includes a curved surface having a cross-sectional shape curving convexly outward in the radial direction. A vertex that is a radially outermost point of the curved surface of the oil ring is disposed at a central portion of the outer peripheral surface of the oil ring in an axial direction of the oil ring. The curved surface of the oil ring forms an arcuate surface passing through a pair of points each spaced apart from the vertex of the oil ring by 0.075 mm on both sides in the axial direction of the oil ring and positioned inward in the radial direction at a drop of 10 $\mu$m or more.

In the sliding mechanism according to still another aspect of the present disclosure, the curved surface and the vertex of the oil ring are configured in a shape that makes it easy to scrape off the lubricating oil on the inner peripheral surface of the cylinder and makes the oil film thin in a situation where the piston sliding speed is high and the proportion of the fluid lubrication region is large during engine operation. With such a shape of the outer peripheral surface of the oil ring, the lubrication state at the sliding contact portion between the outer peripheral surface of the piston ring and the inner peripheral surface of the cylinder is likely to become boundary lubrication, and minute contact between the outer peripheral surface of the piston ring and the inner peripheral surface of the cylinder is likely to increase. As a result, frictional heat increases at the sliding contact portion, and film-like molybdenum disulfide or the like is likely to be formed from the organomolybdenum-based friction modifier.

Therefore, in a sliding mechanism between a piston and an inner peripheral surface of a cylinder, to be applied to an engine configured to conduct a temporary stop automatically, when a lubricating oil of the engine containing an organomolybdenum-based friction modifier is used, it is possible to achieve reduction in friction and wear even in a situation where the piston sliding speed is low.

In one embodiment of the sliding mechanism according to the still another aspect, a chromium-containing film may be formed on the outer peripheral surface of the oil ring. In this case, due to the presence of chromium on the outer peripheral surface of the oil ring, which tends to have a higher surface pressure against the inner peripheral surface of the cylinder among the plurality of piston rings, the phenomenon in which film-like molybdenum disulfide or the like is formed from the organomolybdenum-based friction modifier at the sliding contact portion of the oil ring is effectively expressed.

**Advantageous** Effects of Invention

According to the sliding mechanism related to various aspects of the present disclosure, it is possible to achieve reduction in friction and wear in a situation where the piston sliding speed is low.

Brief Description of Drawings

[FIG. 1] FIG. 1 is a cross-sectional view schematically illustrating a sliding mechanism according to one embodiment.
[FIG. 2] FIG. 2 is a cross-sectional view of the top ring of FIG. 1.
[FIG. 3] FIG. 3 is a cross-sectional view of the second ring of FIG. 1.
[FIG. 4] (a) of FIG. 4 is a cross-sectional view of the oil ring of FIG. 1. (b) of FIG. 4 is an enlarged cross-sectional view of the outer peripheral surface of the oil ring of (a) of FIG. 4.
[FIG. 5] FIG. 5 is a graph illustrating a relationship between an amount of drop of the top ring of FIG. 2 and an average oil film thickness.
[FIG. 6] FIG. 6 is a graph illustrating a relationship between a lower end drop amount of the second ring of FIG. 3 and an average oil film thickness.
[FIG. 7] FIG. 7 is a graph illustrating a relationship between an amount of drop of the oil ring of FIG. 4 and an average oil film thickness.
[FIG. 8] FIG. 8 is a Stribeck curve showing schematic characteristics of a friction coefficient of the sliding mechanism according to one embodiment.
[FIG. 9] FIG. 9 is a cross-sectional view of a top ring according to a modification.
[FIG. 10] FIG. 10 is a cross-sectional view of a second ring according to a modification.

[FIG. 11] FIG. 11 is a cross-sectional view of a second ring according to another modification.

[FIG. 12] (a) of FIG. 12 is an enlarged cross-sectional view of an outer peripheral surface of an oil ring according to a modification. (b) of FIG. 12 is an enlarged cross-sectional view of an outer peripheral surface of an oil ring according to another modification.

[FIG. 13] FIG. 13 is a graph illustrating an average oil film thickness of the oil ring of FIG. 11.

[FIG. 14] FIG. 14 is a graph illustrating a relationship between a total surface pressure of a ring set of the plurality of piston rings of FIG. 1 and an average oil film thickness.

[FIG. 15] FIG. 15 is a graph illustrating a relationship between a composite roughness of the outer peripheral surfaces of the plurality of piston rings and the inner peripheral surface of the cylinder of FIG. 1, and a friction mean effective pressure of the ring set.

**Description of Embodiments**

Hereinafter, embodiments of the present disclosure will be described with reference to the drawings. In the following description, the same or equivalent elements are denoted by the same reference numerals, and a redundant description is omitted. In the following description, "upper side" corresponds to a side of top dead center of a piston (a side of a combustion chamber of an engine), and "lower side" corresponds to a side of bottom dead center of the piston (a side of a crank chamber of the engine).

The sliding mechanism according to the present disclosure is a sliding mechanism between a piston of an engine and an inner peripheral surface of a cylinder, and is applied, for example, to an engine mounted on an automobile. The engine here is configured to conduct a temporary stop automatically during use of the automobile. The engine is, for example, an engine having an idling stop function, an engine mounted on a hybrid vehicle, or the like. The rotational speed of the engine is proportional to the piston sliding speed. Compared to the piston sliding speed during operation of the engine at a predetermined rotational speed or more (for example, 1500 rpm or more), the piston sliding speed during temporary stop and start of the engine is lower. The piston sliding speed means a speed of reciprocating motion of the piston with respect to the inner peripheral surface of the cylinder.

The lubricating oil of the engine contains an organomolybdenum-based friction modifier. As the organomolybdenum-based friction modifier, for example, MoDTC (molybdenum dialkyldithiocarbamate) or MoDTP (molybdenum dialkyldithiophosphate) can be used. In the lubricating oil of the engine here, for example, the content of MoDTC is 2000 ppm or less. As the lubricating oil of the engine, a lubricating oil in which the content of MoDTC exceeds 2000 ppm can also be used. The organomolybdenum-based friction modifier is not limited to MoDTC and MoDTP, and can be adopted as long as it includes an organomolybdenum compound, regardless of the type of base oil, the presence or absence of other additives, or the like.

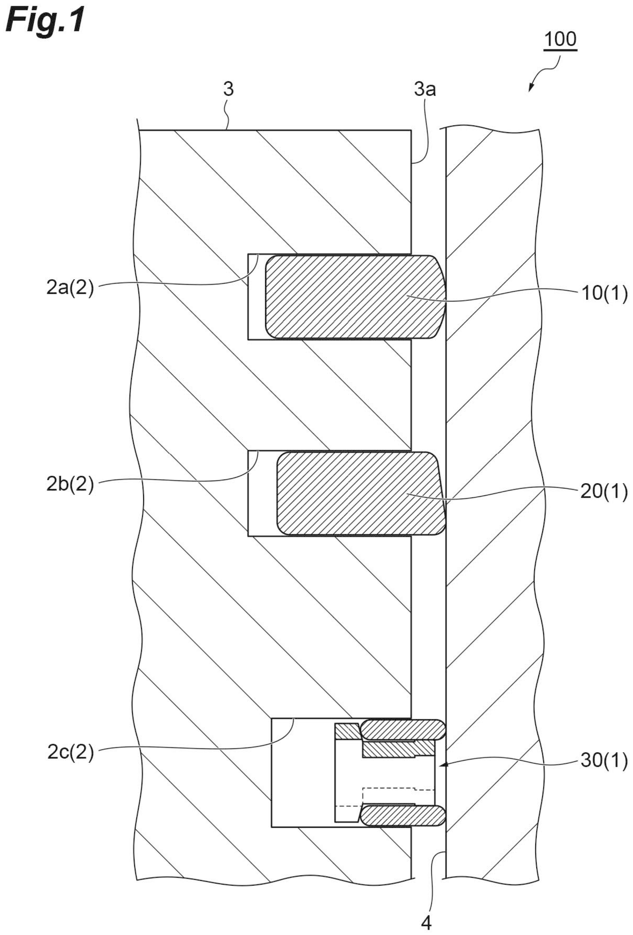

FIG. 1 is a cross-sectional view schematically illustrating a sliding mechanism according to one embodiment. The cross-sectional view of FIG. 1 is a cross-sectional view along the axial direction of the plurality of piston rings 1. FIG. 1 shows a schematic cross section of a part of a piston 3 disposed in a cylinder with a piston ring 1 installed in a ring groove 2. The axial direction of the piston ring 1 is the same direction as a reciprocating direction of the piston 3.

As shown in FIG. 1, a plurality of ring grooves 2 are formed on a piston outer peripheral surface 3a of the piston 3. The plurality of ring grooves 2 here are a top ring groove 2a, a second ring groove 2b, and an oil ring groove 2c in order from the upper side. A plurality of piston rings 1 are installed in the plurality of ring grooves 2, respectively.

The plurality of piston rings 1 include a compression ring having an annular shape and an oil ring having an annular shape. The plurality of piston rings 1 here are a top ring (compression ring) 10 installed into the top ring groove 2a, a second ring (compression ring) 20 installed into the second ring groove 2b, and an oil ring 30 installed into the oil ring groove 2c. That is, the sliding mechanism 100 includes the plurality of piston rings 1 installed in the plurality of ring grooves 2 of the piston 3, respectively. Each piston ring 1 can exhibit a gas sealing function between the combustion chamber and the crank chamber, a scraping-off function of lubricating oil, an oil film formation function of lubricating oil, and the like by sliding with respect to an inner peripheral surface 4 of a cylinder to which the lubricating oil is adheres. The plurality of piston rings 1 installed in the plurality of ring grooves 2 slide with respect to the inner peripheral surface 4 of the cylinder at a speed equal to the piston sliding speed via an oil film of the lubricating oil in accordance with the reciprocating motion of the piston. The inner peripheral surface 4 of the cylinder is an inner wall surface of a cylinder bore.

[Top Ring]

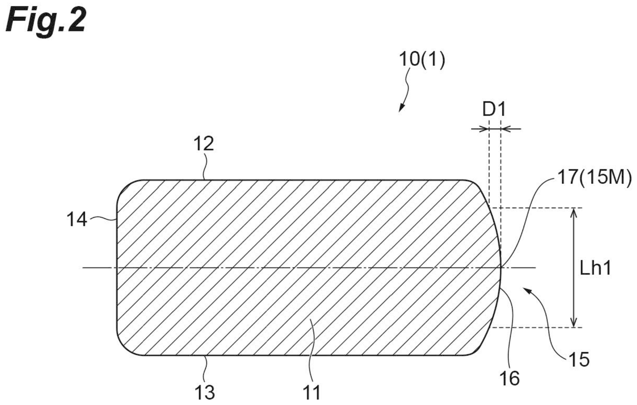

FIG. 2 is a cross-sectional view of the top ring of FIG. 1. As shown in FIGS. 1 and 2, the top ring 10 includes a main body portion 11 having an annular shape and a joint portion (not shown) formed in a part of the main body portion 11. The main body portion 11 includes a pair of side surfaces 12 and 13, and an inner peripheral surface 14 and an outer peripheral surface 15. The side surfaces 12 and 13 are, for example, substantially orthogonal to the inner peripheral surface 14. In the following description, a direction connecting the side surface 12 and the side surface 13 is defined as a width direction of the piston ring 1, and a direction connecting the inner peripheral surface 14 and the outer peripheral surface 15 is defined as a thickness direction of the piston ring 1. The width direction of the piston ring 1 corresponds to a "up-and-down direction" and an "axial direction".

The main body portion 11 has a substantially rectangular cross-sectional shape in which the thickness direction corresponds to a long side and the width direction corresponds to a short side. The main body portion 11 is formed of, for example, cast iron or steel containing a plurality of metal elements, with sufficient strength, heat resistance, and elasticity.

A hard film may be formed on the surface of the main body portion 11 by surface modification. The hard film is, for example, a physical vapor deposition film (PVD film) formed using a physical vapor deposition (PVD) method. This allows the hard film to be formed with sufficient hardness. The hard film is an ion plating film including at least one of titanium (Ti) and chromium (Cr) and at least one of carbon (C), nitrogen (N), and oxygen, or a diamond-like carbon (DLC) film. As a specific example, the hard film is a titanium nitride film, a chromium nitride film, a titanium carbonitride film, a chromium carbonitride film, a chromium oxynitride film, a chromium film, or a titanium film. Among these, when wear resistance and scuffing resistance are emphasized, it is preferable to use a chromium nitride film. The hard film may be a laminate, and may include, for example, a chromium nitride film and a diamond-like carbon film, and the like. Here, a hard film (film) containing chromium nitride (CrN) may be formed on the outer peripheral surface 15 of the top ring 10.

The joint portion is a portion where a part of the main body portion 11 is separated, and is formed by a pair of joint end portions facing each other. Each of the pair of joint end portions is a portion that is a free end of the main body portion 11. A joint gap of the joint portion is configured to narrow, for example, when the top ring 10 is heated and thermally expanded. The joint portion functions as a relief portion for thermal expansion of the main body portion 11 due to a temperature difference between the top ring 10 and the inner peripheral surface 4 of the cylinder during use of the top ring 10.

The outer peripheral surface 15 of the main body portion 11 of the top ring 10 will be described in detail. In the following description, the shape of a line related to the outer peripheral surface of each piston ring 1 means the shape of the line in a cross-sectional view of the piston ring 1, unless otherwise specified.

On the outer peripheral surface 15 of the top ring 10, as an example, a curved surface 16 having a cross-sectional shape curving convexly outward in a radial direction is provided. The curved surface 16 is, for example, an arcuate surface having, as both ends, a radially outer end of the side surface 12 and a radially outer end of the side surface 13. The center of the arcuate surface of the curved surface 16 may be located, for example, midway between the side surface 12 and the side surface 13. In this case, the outermost part of the arcuate surface in the radial direction of the top ring 10 is located at the center in the width direction connecting the side surface 12 and the side surface 13 on the outer peripheral surface 15. That is, a vertex 17 that is a radially outermost point of the curved surface 16 of the top ring 10 is disposed at a central portion 15M of the outer peripheral surface 15 of the top ring 10 in the width direction (axial direction) of the top ring 10. The vertex 17 is a portion of the outer peripheral surface 15 that protrudes most outward in the radial direction, and is a point that forms a sliding contact portion with the inner peripheral surface 4 of the cylinder. The vertex 17 forms an annular shape by extending over the entire circumferential direction of the main body portion 11. The outer peripheral surface 15 of the top ring 10 has a symmetrical barrel shape that is symmetrical in the width direction with the vertex 17 as a boundary.

The barrel shape means a curved surface that curves convexly outward in the radial direction of the piston ring 1 and includes the radially outermost part of the piston ring 1. The barrel shape includes a symmetrical barrel shape and an eccentric barrel shape. The symmetrical barrel shape means a barrel shape in which the radially outermost part (vertex) of the piston ring 1 is located at the center in the width direction of the outer peripheral surface of the piston ring 1. The eccentric barrel shape means a barrel shape in which the radially outermost part (vertex) of the piston ring 1 is located on the lower side (closer to the crank chamber) of the center in the width direction of the outer peripheral surface of the piston ring 1.

The size of the arcuate surface of the curved surface 16 can be defined by an amount of drop (dimension of drop) in the radial direction of the top ring 10 between points separated by a certain distance in the width direction from the vertex 17 (for example, one point each separated by 0.3 mm upward and downward) and the position of the vertex 17. The amount of drop of the curved surface 16 may be, for example, 2 $\mu$m or more and 10 $\mu$m or less. The amount of drop of the curved surface 16 may be, for example, 3 $\mu$m or more and 7 $\mu$m or less. The amount of drop of the curved surface 16 may be, for example, 4 $\mu$m or more and 5 $\mu$m or less. That is, the curved surface 16 of the top ring 10 forms an arcuate surface passing through a pair of points each spaced apart from the vertex 17 of the top ring 10 by 0.3 mm (Lh1 in FIG. 2 is 0.6 mm) on both sides in the width direction (axial direction) of the top ring 10 and positioned inward in the radial direction at a drop (D1 in FIG. 2) of 2 $\mu$m or more.

[Second Ring]

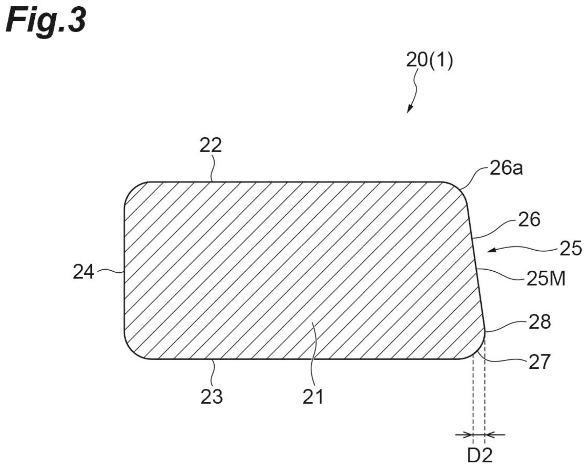

FIG. 3 is a cross-sectional view of the second ring of FIG. 1. As shown in FIGS. 1 and 3, the second ring 20 includes a main body portion 21 having an annular shape and a joint portion (not shown) formed in a part of the main body portion 21. The main body portion 21 includes a pair of side surfaces 22 and 23, and an inner peripheral surface 24 and an outer peripheral surface 25. The side surfaces 22 and 23 are, for example, substantially orthogonal to the inner peripheral surface 24. The joint portion is configured, for example, similarly to the joint portion of the main body portion 11 of the top ring 10 described above.

The main body portion 21 has a substantially rectangular cross-sectional shape in which the thickness direction corresponds to a long side and the width direction corresponds to a short side. The main body portion 21 is formed of, for example, cast iron or steel containing a plurality of metal elements, with sufficient strength, heat resistance, and elasticity.

A hard film may be formed on the surface of the main body portion 21 by surface modification, similarly to the main body portion 11 of the top ring 10 described above. Here, a hard film (film) containing chromium nitride (CrN) may be formed on the outer peripheral surface 25 of the second ring 20.

The outer peripheral surface 25 of the main body portion 21 of the second ring 20 will be described in detail. The outer peripheral surface 25 of the second ring 20 includes, as an example, a tapered surface 26. The tapered surface 26 here is an inclined surface having a cross-sectional shape that protrudes outward in the radial direction toward the lower side. The tapered surface 26 extends, for example, so as to connect a radially outer end of the side surface 22 and a radially outer end of the side surface 23 in a straight line. At an upper end portion of the tapered surface 26, a chamfered portion 26a continuous with the radially outer end of the side surface 22 is formed. At a lower end portion of the tapered surface 26, a lower end drop portion 27, which is an arcuate surface continuous with the radially outer end of the side surface 23, is formed. A boundary between a straight portion of the tapered surface 26 and the lower end drop portion 27 is a vertex 28 of the outermost part of the outer peripheral surface 25 in the radial direction of the second ring 20, and is located on a side of bottom dead center relative to a middle point between the side surface 22 and the side surface 23 in the width direction. That is, the outer peripheral surface 25 of the second ring 20 protrudes outward in the radial direction, and a vertex 28 that is a radially outermost point of the outer peripheral surface 25 of the second ring 20 is disposed on a side of bottom dead center of the piston 3 relative to a central portion 25M of the outer peripheral surface 25 of the second ring 20 in the width direction (axial direction) of the second ring 20. The vertex 28 of the second ring 20 is disposed at a position that is a distance of less than 50% of a width dimension of the second ring 20 (a distance in the width direction between the side surface 22 and the side surface 23) with reference to the side of the bottom dead center (side surface 23) of the second ring 20. The vertex 28 is a portion of the outer peripheral surface 25 that protrudes most outward in the radial direction, and is a point that forms a sliding contact portion with the inner peripheral surface 4 of the cylinder. The vertex 28 forms an annular shape by extending over the entire circumferential direction of the main body portion 21.

The size of the arcuate surface of the lower end drop portion 27 can be defined by a lower end drop amount (dimension of drop) from the position of the vertex 28 to a radially inner end of the arcuate surface in the radial direction of the second ring 20. The lower end drop amount may be, for example, 2 μm or less. The lower end drop amount may be, for example, greater than 0 μm and 1 μm or less. That is, the arcuate surface of the lower end drop portion 27 of the second ring 20 forms an arcuate surface passing through a point positioned inward in the radial direction from the position of the vertex 28 at a drop (D2 in FIG. 3) of 2 μm or less in the radial direction of the second ring 20. An axial dimension from the side surface 23 to the vertex 28 may be, for example, 2 μm or less.

[Oil Ring]

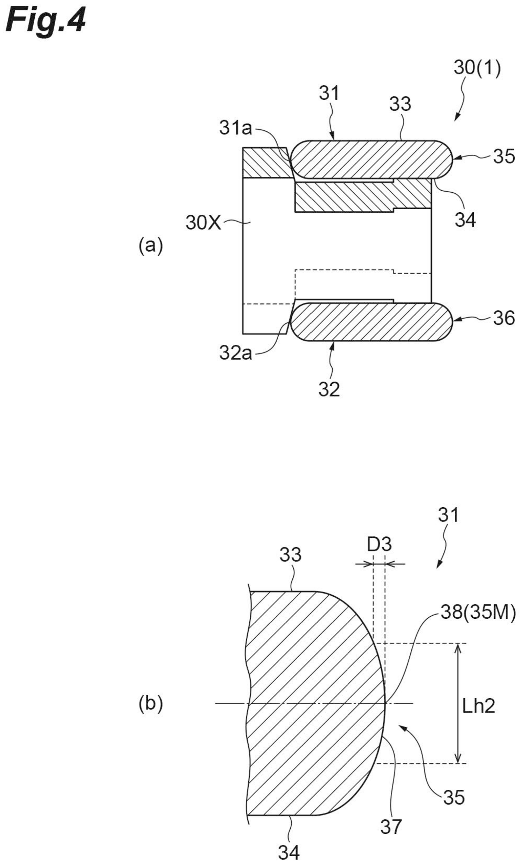

(a) of FIG. 4 is a cross-sectional view of the oil ring of FIG. 1. (b) of FIG. 4 is an enlarged cross-sectional view of the outer peripheral surface of the oil ring of (a) of FIG. 4. As shown in FIG. 1, (a) of FIG. 4, and (b) of FIG. 4, the oil ring 30 is a three-piece oil control ring including a pair of side rails 31 and 32, and a spacer expander 30X disposed between the pair of side rails 31 and 32. Outer peripheral surfaces 35 and 36 of the side rails 31 and 32 are in contact with the inner peripheral surface 4 of the cylinder. Inner peripheral surfaces 31a and 32a of the side rails 31 and 32 are in contact with ear portions of the spacer expander 30X. As the spacer expander 30X, a spacer expander having a known configuration can be used.

The width dimension in the axial direction of the side rails 31 and 32 is, for example, about 0.35 mm. The width dimensions of the side rails 31 and 32 may be common or may be different from each other.

The material of the side rails 31 and 32 is, for example, stainless steel or carbon steel. The side rails 31 and 32 may include a hard film (not shown) provided so as to cover at least the outer peripheral surfaces 35 and 36. The hard film of the side rails 31 and 32 can be the same hard film as that of the main body portion 11 of the top ring 10 described above. Here, a hard film (film) containing chromium nitride (CrN) may be formed on the outer peripheral surfaces 35 and 36 of the oil ring 30. As shown in (a) of FIG. 4, the side rails 31 and 32 have, for example, the same shape. Hereinafter, the shape of the side rail 31 will be described, and the description of the shape of the side rail 32 will be omitted.

On the outer peripheral surface 35 of the side rail 31, as an example, a curved surface 37 having a cross-sectional shape curving convexly outward in a radial direction is provided. The curved surface 37 is, for example, an arcuate surface having, as both ends, a radially outer end of the side surface 33 and a radially outer end of the side surface 34. The center of the arcuate surface of the curved surface 37 may be located, for example, midway between the side surface 33 and the side surface 34. In this case, the outermost part of the arcuate surface in the radial direction of the oil ring 30 is located at the center in the width direction connecting the side surface 33 and the side surface 34 on the outer peripheral surface 35. That is, each of the pair of outer peripheral surfaces 35 and 36 of the oil ring 30 includes a curved surface 37 having a cross-sectional shape curving convexly outward in a radial direction. A vertex 38 that is a radially outermost point of the curved surface 37 of the oil ring 30 is disposed at a central portion 35M of the outer peripheral surfaces 35 and 36 of the oil ring 30 in the width direction (axial direction) of the oil ring 30. The vertex 38 is a portion of the outer peripheral surface 35 that protrudes most outward in the radial direction, and is a point that becomes a sliding contact portion with the inner peripheral surface 4 of the cylinder. The vertex 38 forms an annular shape by extending over the entire circumferential direction of the side rail 31. The outer peripheral surface 35 of the oil ring 30 has a symmetrical barrel shape that is symmetrical in the width direction with the vertex 38 as a boundary.

The size of the arcuate surface of the curved surface 37 can be defined by an amount of drop (dimension of drop) in the radial direction of the side rail 31 between points separated by a certain distance in the width direction from the vertex 38 (for example, points each separated by 0.075 mm upward and downward) and the position of the vertex 38. The amount of drop of the curved surface 37 may be, for example, 10 $\mu$m or more and 30 $\mu$m or less. The amount of drop of the curved surface 37 may be, for example, 15 $\mu$m or more and 25 $\mu$m or less. The amount of drop of the curved surface 37 may be, for example, 20 $\mu$m or more and 25 $\mu$m or less. That is, the curved surface 37 of the oil ring 30 forms an arcuate surface passing through a pair of points each spaced apart from the vertex 38 of the oil ring 30 by 0.075 mm on both sides in the width direction (axial direction) of the oil ring 30 and positioned inward in the radial direction at a drop of 10 $\mu$m or more.

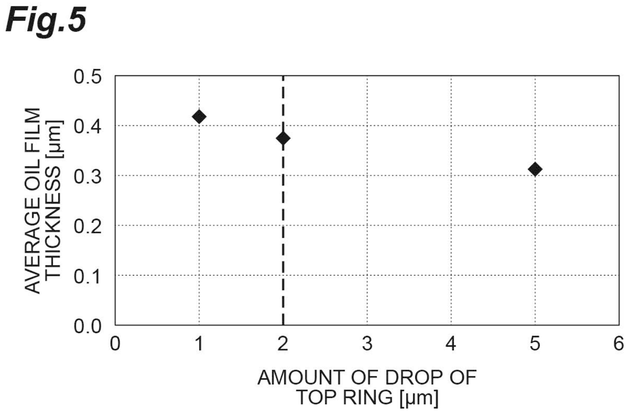

For the sliding mechanism 100 including the top ring 10, the second ring 20, and the oil ring 30 configured as described above, simulation results in a situation where the piston sliding speed is low will be described with reference to FIGS. 5 to 7. The simulation results of FIGS. 5 to 7 are results of a simulation performed under motoring operating conditions, in the sliding mechanism 100, where the width dimension of the top ring 10 is 1.2 mm, the width dimension of the second ring 20 is 1.2 mm, the width dimension of the oil ring 30 is 0.35 mm, a hard film (film) containing chromium nitride (CrN) is formed on the outer peripheral surface 15 of the top ring 10, the outer peripheral surface 25 of the second ring 20, and the outer peripheral surfaces 35 and 36 of the oil ring 30, the diameter of the cylinder bore is 86 mm, the stroke of the reciprocating motion of the piston 3 is 86 mm, the inner peripheral surface 4 of the cylinder is made of cast iron (material: FC250), a low-viscosity engine oil (SAE 0W-8) is used as the lubricating oil of the engine, the oil temperature of the lubricating oil of the engine is 80°C, and the rotational speed of the engine is 1200 rpm.

FIG. 5 is a graph illustrating a relationship between an amount of drop of the top ring of FIG. 2 and an average oil film thickness. The horizontal axis of FIG. 5 is the amount of drop of the top ring 10, and the vertical axis is the average oil film thickness between the outer peripheral surface 15 of the top ring 10 and the inner peripheral surface 4 of the cylinder. As shown in FIG. 5, it can be seen that as the amount of drop of the top ring 10 increases, the average oil film thickness between the outer peripheral surface 15 of the top ring 10 and the inner peripheral surface 4 of the cylinder tends to decrease. This tendency corresponds to the fact that as the amount of drop of the top ring 10 increases, the radius of curvature of the curved surface 16 of the outer peripheral surface 15 of the top ring 10 decreases, and the outer peripheral surface 15 approaches a pointed shape at the curved surface 16, which makes it easier to scrape off the lubricating oil on the inner peripheral surface 4 of the cylinder and causes the oil film to become thinner.

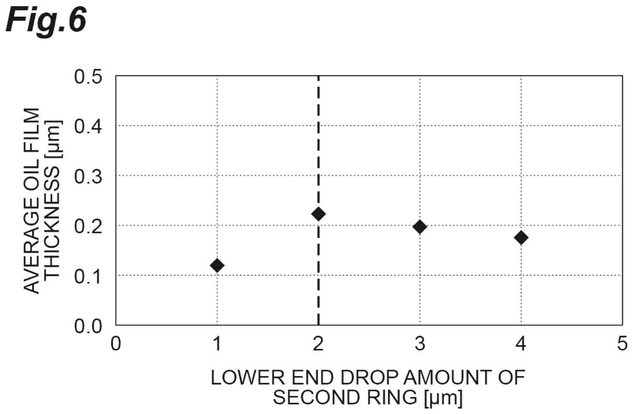

FIG. 6 is a graph illustrating a relationship between a lower end drop amount of the second ring of FIG. 3 and an average oil film thickness. The horizontal axis of FIG. 6 is the lower end drop amount of the second ring 20, and the vertical axis is the average oil film thickness between the outer peripheral surface 25 of the second ring 20 and the inner peripheral surface 4 of the cylinder. As shown in FIG. 6, it can be seen that as the lower end drop amount of the second ring 20 decreases in a range of 2 $\mu$m or less, the average oil film thickness between the outer peripheral surface 25 of the second ring 20 and the inner peripheral surface 4 of the cylinder tends to decrease. This tendency corresponds to the fact that as the lower end drop amount of the second ring 20 decreases in the range of 2 $\mu$m or less, the vicinity of the vertex 28 of the outer peripheral surface 25 of the second ring 20 becomes sharper (approaches a sharp edge), which makes it easy to scrape off the lubricating oil on the inner peripheral surface 4 of the cylinder and tends to make the oil film thinner.

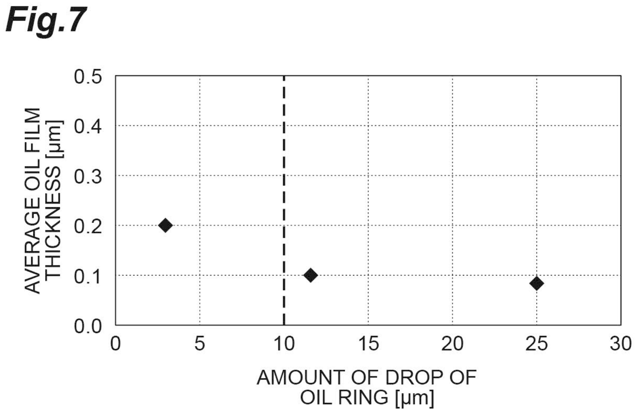

FIG. 7 is a graph illustrating a relationship between an amount of drop of the oil ring of FIG. 4 and an average oil film thickness. The horizontal axis of FIG. 7 is the amount of drop of the side rails 31 and 32 of the oil ring 30, and the vertical axis is the average oil film thickness between the outer peripheral surfaces 35 and 36 of the side rails 31 and 32 and the inner peripheral surface 4 of the cylinder. As shown in FIG. 7, it can be seen that as the amount of drop of the side rails 31 and 32 increases, the average oil film thickness between the outer peripheral surfaces 35 and 36 of the side rails 31 and 32 and the inner peripheral surface 4 of the cylinder tends to decrease. This tendency corresponds to the fact that as the amount of drop of the side rails 31 and 32 increases, the radius of curvature of the curved surface 37 of the outer peripheral surfaces 35 and 36 of the side rails 31 and 32 decreases, and the outer peripheral surfaces 35 and 36 approach a pointed shape at the curved surface 37, which makes it easy to scrape off the lubricating oil on the inner peripheral surface 4 of the cylinder and tends to make the oil film thin.

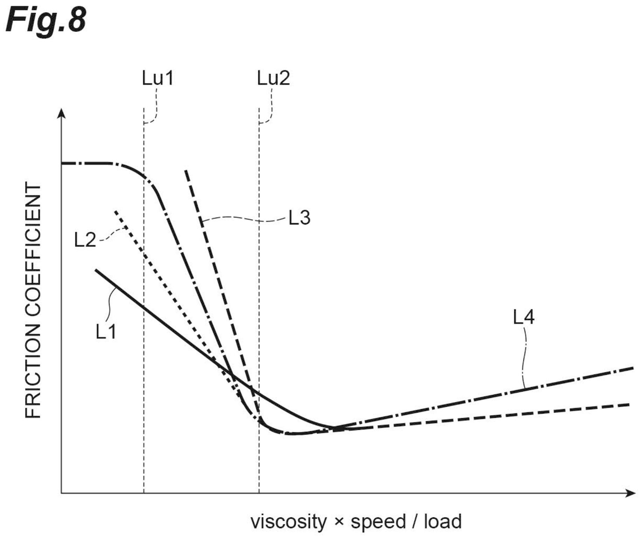

Here, FIG. 8 is a Stribeck curve showing schematic characteristics of a friction coefficient of the sliding mechanism according to one embodiment. The horizontal axis of FIG. 8 is a value obtained by dividing a product of a viscosity of the lubricating oil of the engine and a piston sliding speed by a vertical load (load) with respect to the inner peripheral surface 4 of the cylinder, and the vertical axis is a friction coefficient via an oil film of the lubricating oil between the plurality of piston rings 1 and the inner peripheral surface 4 of the cylinder.

In FIG. 8, assuming that the viscosity of the lubricating oil of the engine and the vertical load are constant, the horizontal axis is proportional to the piston sliding speed. In this case, the higher the rotational speed of the engine, the higher the piston sliding speed, which corresponds to points on the right side of the horizontal axis. The lower the rotational speed of the engine, the lower the piston sliding speed, which corresponds to points on the left side of the horizontal axis. Vertical broken lines Lu1 and Lu2 in FIG. 8 are lines that separate a fluid lubrication region, a boundary lubrication region, and a mixed lubrication region between the fluid lubrication region and the boundary lubrication region. The region on the horizontal axis to the left of the broken line Lu1 corresponds to the boundary lubrication region. The region on the horizontal axis to the right of the broken line Lu2 corresponds to the fluid lubrication region. A portion between the broken line Lu1 and the broken line Lu2 on the horizontal axis corresponds to the mixed lubrication region.

In FIG. 8, a solid line L1 is a line corresponding to expected characteristics of "the sliding mechanism 100 including the configuration of the above embodiment when using a low-viscosity lubricating oil containing an organomolybdenum-based friction modifier". A short-dashed line L2 is a line corresponding to known characteristics of "a comparative example that differs from the solid line L1 in that the outer peripheral surface shapes of the plurality of piston rings 1 among the configurations of the above embodiment are returned to known shapes". A long-dashed line L3 is a line corresponding to known characteristics of "a comparative example that differs from the short-dashed line L2 in that a low-viscosity lubricating oil not containing an organomolybdenum-based friction modifier is used". A one-dot chain line L4 is a line corresponding to known characteristics of "a comparative example that differs from the case of the long-dashed line L3 in that the viscosity of the lubricating oil is high".

In FIG. 8, as a related art, comparing the one-dot chain line L4 and the long-dashed line L3, the long-dashed line L3 (low-viscosity lubricating oil) has a smaller friction coefficient in the fluid lubrication region on the right side of the broken line Lu2 and a larger friction coefficient in the mixed lubrication region and the boundary lubrication region on the left side of the broken line Lu2 than the one-dot chain line L4. In this comparison, it can be said that a low-viscosity lubricating oil is more likely to increase the frequency of boundary lubrication (solid lubrication) between the plurality of piston rings 1 and the inner peripheral surface 4 of the cylinder. In an engine not configured to conduct a temporary stop automatically, since there are many opportunities for operation at a piston sliding speed that results in a fluid lubrication region, this can be considered a design philosophy that prioritizes reduction in friction in the fluid lubrication region. Also, by including an organomolybdenum-based friction modifier in the low-viscosity lubricating oil, reduction in friction is achieved in the mixed lubrication region and the boundary lubrication region on the left side of the broken line Lu2, with the short-dashed line L2 being lower than the long-dashed line L3. However, in an engine configured to conduct a temporary stop automatically, since opportunities for temporary stop and start of the engine are likely to increase and opportunities for operation at a low piston sliding speed are likely to increase, the lubrication state between the outer peripheral surface of the piston ring and the inner peripheral surface of the cylinder is more likely to result in boundary lubrication (solid lubrication) compared to an engine not configured to conduct a temporary stop automatically. Applying this to the example of FIG. 8, even with the short-dashed line L2, there was still room for achieving reduction in friction in the boundary lubrication region.

Therefore, contrary to the conventional design philosophy that prioritizes friction reduction in the fluid lubrication region, the present inventor has adopted a counter-intuitive design philosophy that prioritizes friction and wear reduction in the boundary lubrication region. Based on this philosophy, the inventor has configured the sliding mechanism 100 to include a plurality of piston rings 1 having an outer peripheral surface shape that intentionally thins the lubricating oil film on the inner peripheral surface 4 of the cylinder. According to this configuration, even in a situation where the piston sliding speed is low, the phenomenon in which film-like molybdenum disulfide or the like is formed from the organomolybdenum-based friction modifier at the sliding contact portion is likely to be exhibited. As a result, as shown by the solid line L1 corresponding to the sliding mechanism 100 in FIG. 8, it is expected that reduction in friction can be achieved in the boundary lubrication region compared to the short-dashed line L2.

As described above, in the sliding mechanism 100, the outer peripheral surface 15, the outer peripheral surface 25, and the outer peripheral surfaces 35 and 36 are configured in a shape that, in a situation where the piston sliding speed is high and the proportion of the fluid lubrication region is large during engine operation, makes it easy to scrape off the lubricating oil on the inner peripheral surface 4 of the cylinder and tends to make the oil film thin. As a result, the lubrication state at the sliding contact portions between the outer peripheral surface 15, the outer peripheral surface 25, and the outer peripheral surfaces 35 and 36 and the inner peripheral surface 4 of the cylinder is likely to become boundary lubrication, and minute contacts between the outer peripheral surface 15, the outer peripheral surface 25, and the outer peripheral surfaces 35 and 36 and the inner peripheral surface 4 of the cylinder are likely to increase. As a result, frictional heat increases at the sliding contact portion, and thus film-like molybdenum disulfide or the like is likely to be formed from the organomolybdenum-based friction modifier. Therefore, the sliding mechanism 100 between the piston 3 and the inner peripheral surface 4 of the cylinder, which is applied to an engine configured to conduct a temporary stop automatically, makes it possible to achieve a reduction in friction and wear even in a situation where the piston sliding speed is low when using a lubricating oil of the engine containing an organomolybdenum-based friction modifier.

In the sliding mechanism 100, a chromium-containing film is formed on the outer peripheral surface 15, the outer peripheral surface 25, and the outer peripheral surfaces 35 and 36. As a result, due to the presence of chromium, the phenomenon in which film-like molybdenum disulfide or the like is formed from the organomolybdenum-based friction modifier at the sliding contact portion is more likely to be exhibited.

[Modification]

Although the embodiments of the present disclosure have been described above, the present disclosure is not limited to the above-described embodiments. The present disclosure can be implemented in various forms with various modifications and improvements based on the knowledge of those skilled in the art, including the above-described embodiments.

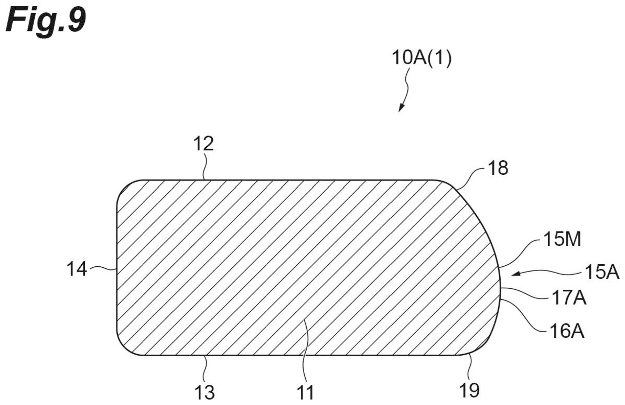

In the above embodiment, the top ring 10 had a symmetrical barrel shape that is symmetrical in the width direction with the vertex 17 as a boundary, but it may have an eccentric barrel shape. For example, FIG. 9 is a cross-sectional view of a top ring according to a modification. On an outer peripheral surface 15A of a top ring 10A of FIG. 9, as an example, a curved surface 16A having a cross-sectional shape curving convexly outward in a radial direction is provided. The curved surface 16A is, for example, a part of an arcuate surface whose center is located on a side of bottom dead center relative to a middle point between the side surface 12 and the side surface 13 in the width direction. That is, the outer peripheral surface 15A of the top ring 10A protrudes outward in the radial direction, and a vertex 17A that is a radially outermost point of the outer peripheral surface 15A of the top ring 10A is disposed on a side of bottom dead center of the piston relative to a central portion 15M of the outer peripheral surface 15A of the top ring 10A in the width direction (axial direction) of the top ring 10A. The outer peripheral surface 15A of the top ring 10A is a curved surface (eccentric barrel shape) that is a barrel shape and in which the radially outermost part (vertex 17A) of the top ring 10A is located on the lower side (closer to the crank chamber) of the central portion 15M in the width direction of the outer peripheral surface 15A of the top ring 10A. The amount of drop of the curved surface 16A of the top ring 10A is defined, for example, similarly to the amount of drop of the curved surface 16 of the top ring 10. In this case, a connecting surface 18 having a radius of curvature different from that of the curved surface 16A may be interposed between an upper end of the curved surface 16A and a radially outer end of the side surface 12. A connecting surface 19 having a radius of curvature different from that of the curved surface 16A may be interposed between a lower end of the curved surface 16A and a radially outer end of the side surface 13. The amount of drop of the curved surface 16A of the top ring 10A having the eccentric barrel shape may be different between the upper side (the side of the top dead center of the piston) and the lower side (the side of the bottom dead center of the piston) of the vertex 17A.

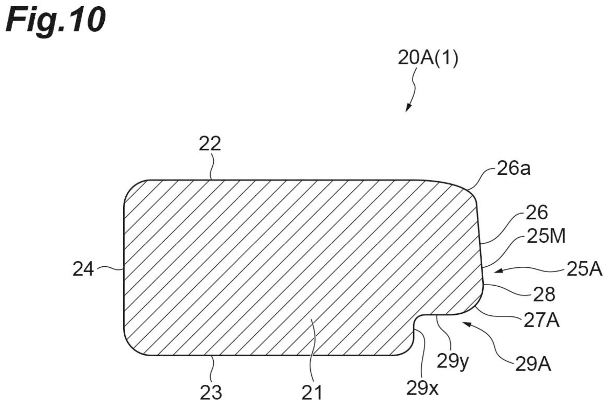

In the above embodiment, at the lower end portion of the tapered surface 26 of the second ring 20, the lower end drop portion 27 is directly continuous with the radially outer end of the side surface 23, but a cutout portion may be provided between the lower end drop portion 27 and the radially outer end of the side surface 23. For example, FIG. 10 is a cross-sectional view of a second ring according to a modification. As shown in FIG. 10, a cutout portion 29A is formed in a main body portion 21A of a second ring 20A. The cutout portion 29A is a portion where a corner formed by a side surface 23A and an outer peripheral surface 25A is cut out, and extends over the entire circumferential direction of the main body portion 21A. The cutout portion 29A is formed, for example, by cutting out a part of the main body portion 21A at a corner between the side surface 23A and the outer peripheral surface 25A over the entire circumference with a jig for cutting, grinding, or polishing. The cutout portion 29A may also be formed by subjecting the part of the main body portion 21A to plastic processing, such as rolling, drawing, or the like. The cutout portion 29A includes a first surface 29x facing toward the outer peripheral surface 25A and a second surface 29y facing the side surface 23A. The first surface 29x extends substantially in parallel with the inner peripheral surface 24, and the second surface 29y extends substantially in parallel with the side surfaces 22 and 23A. For this reason, an angle formed by the first surface 29x and the second surface 29y is substantially a right angle. A lower end drop portion 27A formed by the second surface 29y and the outer peripheral surface 25A is configured similarly to the lower end drop portion 27 of the second ring 20. The second ring 20A has a so-called scraper-cut shape.

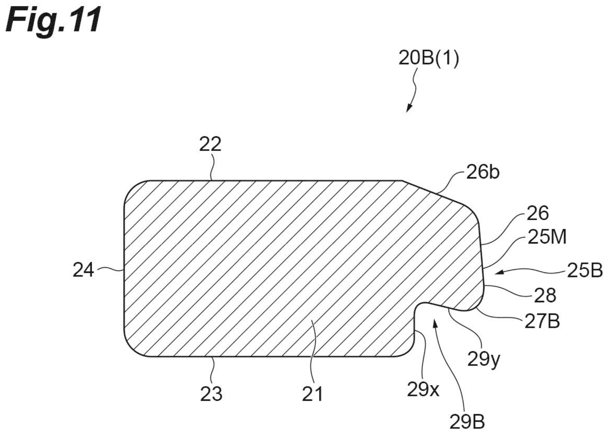

As another example, FIG. 11 is a cross-sectional view of a second ring according to another modification. As shown in FIG. 11, in an outer peripheral surface 25B of a second ring 20B, a second surface 29z of a cutout portion 29B is not parallel to a side surface 23A of a main body portion 21B. The second surface 29z is inclined so as to approach the side surface 23A toward a radially outer side of the second ring 20B. A lower end drop portion 27B formed by the second surface 29z and the outer peripheral surface 25B is configured similarly to the lower end drop portion 27 of the second ring 20. The second ring 20B has a so-called Napier cut shape. In the second ring 20B, instead of the chamfered portion 26a, an inclined surface 26b that is inclined at a larger angle with respect to the width direction than the tapered surface 26 may be provided.

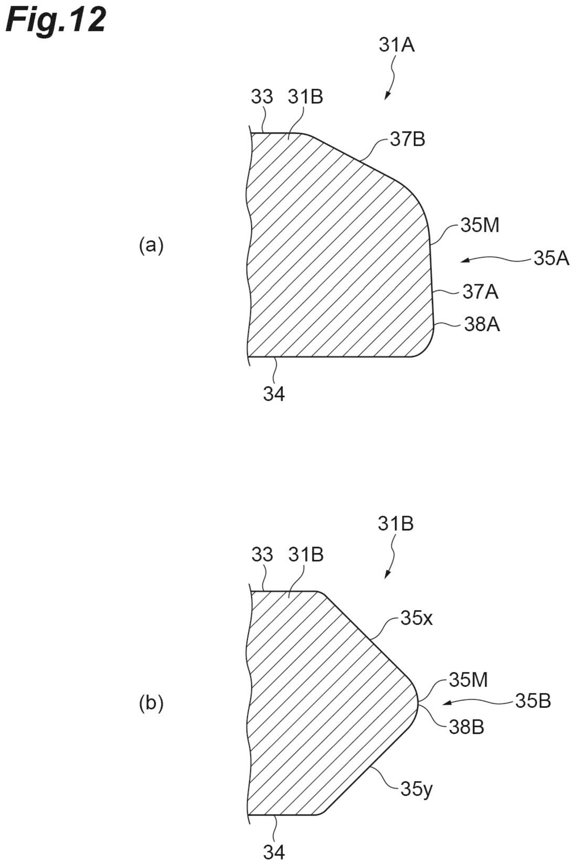

In the above embodiment, the outer peripheral surfaces 35 and 36 of the oil ring 30 had a symmetrical barrel shape that is symmetrical in the width direction with the vertex 38 as a boundary, but the present disclosure is not limited to this example. For example, (a) of FIG. 12 is an enlarged cross-sectional view of an outer peripheral surface of an oil ring according to a modification. An outer peripheral surface 35A of a side rail 31A includes a contact surface 37A substantially parallel to the width direction, and an inclined surface 37B extending from an upper end of the contact surface 37A to the side of the combustion chamber. The inclined surface 37B, on the side of the combustion chamber of the contact surface 37A, is tapered (i.e., reduced in diameter) toward the combustion chamber. The outer peripheral surface 35A of the side rail 31A has a so-called tapered rail shape.

As another example, (b) of FIG. 12 is an enlarged cross-sectional view of an outer peripheral surface of an oil ring according to another modification. A side rail 31B includes an outer peripheral surface 35B, side surfaces 33 and 34, an inclined surface 35x between the outer peripheral surface 35B and the side surface 33, and an inclined surface 35y between the outer peripheral surface 35B and the side surface 34. The outer peripheral surface 35B, the inclined surface 35x, and the inclined surface 35y have, as an example, a vertically symmetrical shape in a cross section in the axial direction. The outer peripheral surface 35B of the side rail 31B has a so-called bullet shape. For example, a tip portion of the outer peripheral surface 35B is formed of an arcuate surface with a predetermined radius of curvature. In an axial cross section, the inclined surface 35x is an inclined surface that extends in a straight line from the end, on the side of the side surface 33, of the arcuate surface forming a tip portion of the outer peripheral surface 35B to the radially outermost part of the side surface 33. In an axial cross section, the inclined surface 35y is an inclined surface that extends in a straight line from the end, on the side of the side surface 34, of the arcuate surface forming a tip portion of the outer peripheral surface 35B to the radially outermost part of the side surface 34. An angle formed by a plane orthogonal to the axial direction and the inclined surfaces 35x and 35y may be, for example, 30 to 50°.

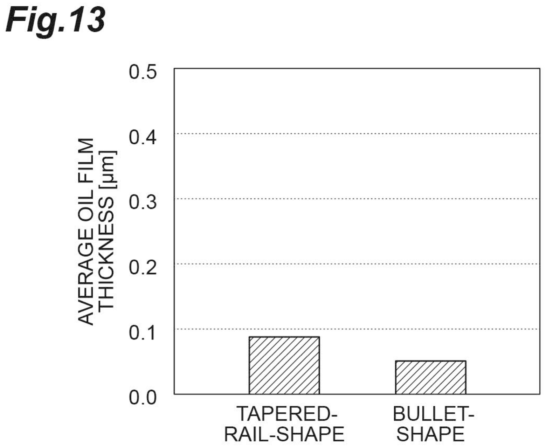

FIG. 13 is a graph illustrating an average oil film thickness of the oil ring of FIG. 12. The horizontal axis of FIG. 13 corresponds to the outer peripheral surface shapes of the side rails 31A and 31B of the oil rings 30A and 30B of (a) of FIG. 12 and (b) of FIG. 12, and the vertical axis is the average oil film thickness between the outer peripheral surfaces 35A and 35B of the side rails 31 and 32 and the inner peripheral surface 4 of the cylinder. As shown in FIG. 13, both the tapered-rail-shape side rail 31A of (a) of FIG. 12 and the bullet-shape side rail 31B of (b) of FIG. 12 have an average oil film thickness of less than 0.1 $\mu$m. Therefore, since the average oil film thickness is smaller than when the amount of drop in the oil ring 30 of (b) of FIG. 4 is 10 $\mu$m, according to the oil rings 30A and 30B of (a) of FIG. 12 and (b) of FIG. 12, it becomes easy to scrape off the lubricating oil on the inner peripheral surface 4 of the cylinder and the oil film tends to become thinner.

Incidentally, by increasing the total surface pressure of the plurality of piston rings 1 against the inner peripheral surface 4 of the cylinder, it may be easy to scrape off the lubricating oil on the inner peripheral surface 4 of the cylinder, which may increase frictional heat at the sliding contact portion and facilitate the formation of film-like molybdenum disulfide or the like from the organomolybdenum-based friction modifier. The total surface pressure P here is a value obtained by adding the surface pressure of each piston ring 1 calculated by the following formula (1) for all of the plurality of piston rings 1. For the oil ring 30, the sum of both the side rails 31 and 32 is used. In the following formula (1), P is the surface pressure of the outer periphery of the piston ring 1, Ft is the tension of the piston ring 1, D is the diameter of the cylinder bore, and h1 is the width dimension of the piston ring 1.

[Math. 1]

$$P = \frac{2 \times Ft}{D \times h1} \quad \cdot \cdot \cdot \ (1)$$

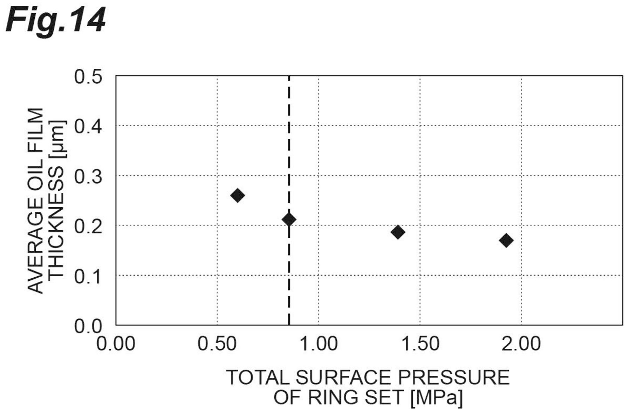

For example, the total surface pressure P of the plurality of piston rings 1 against the inner peripheral surface 4 of the cylinder may be 0.85 MPa or more and 5.5 MPa or less. The total surface pressure P of a ring set of the plurality of piston rings 1 against the inner peripheral surface 4 of the cylinder may be 1.5 MPa or more and 5.5 MPa or less. FIG. 14 is a graph illustrating a relationship between the total surface pressure P of the ring set of the plurality of piston rings of FIG. 1 and an average oil film thickness. The horizontal axis of FIG. 14 is the total surface pressure P of the ring set of the plurality of piston rings 1, and the vertical axis is the average oil film thickness between the ring set and the inner peripheral surface 4 of the cylinder. The average oil film thickness of this ring set is a value obtained by further averaging four average oil film thicknesses for the top ring 10, the second ring 20, and the oil ring 30 (the pair of side rails 31 and 32). As shown in FIG. 14, it can be seen that as the total surface pressure P of the ring set increases, the average oil film thickness between the ring set and the inner peripheral surface 4 of the cylinder tends to decrease. This tendency corresponds to the fact that as the total surface pressure P of the ring set increases, the outer peripheral surfaces of the plurality of piston rings 1 are pressed toward the inner peripheral surface 4 of the cylinder, which makes it easy to scrape off the lubricating oil on the inner peripheral surface 4 of the cylinder and causes the oil film thin. For example, when the total surface pressure P of the top ring 10, the second ring 20, and the oil ring 30 against the inner peripheral surface 4 of the cylinder is 0.85 MPa or more, the oil film on the inner peripheral surface 4 of the cylinder becomes thinner compared to the case where the total surface pressure P is less than 0.85 MPa, and thus the phenomenon in which film-like molybdenum disulfide or the like is formed from the organomolybdenum-based friction modifier at the sliding contact portion is more likely to be exhibited.

Also, by increasing a composite roughness of the outer peripheral surface 15 of the top ring 10, the outer peripheral surface 25 of the second ring 20, and the outer peripheral surfaces 35 and 36 of the oil ring 30, and the inner peripheral surface 4 of the cylinder, it may be easy to scrape off the lubricating oil on the inner peripheral surface 4 of the cylinder, which may increase frictional heat at the sliding contact portion and facilitate the formation of film-like molybdenum disulfide or the like from the organomolybdenum-based friction modifier. The composite roughness Ra here is $\sigma$ on the left side calculated by the following formula (2), and can be calculated for each piston ring 1. In the following formula (2), $\sigma r$ is the outer peripheral roughness Ra of the piston ring 1, and $\sigma l$ is the inner peripheral roughness Ra of the inner peripheral surface 4 of the cylinder. The composite roughness Ra is calculated as a value of the piston ring 1 in an unused state (a state immediately after processing or a state at shipment as a new product).

[Math. 2]

$$\sigma = \sqrt{\sigma r^2 + \sigma l^2} \quad \cdots \quad (2)$$

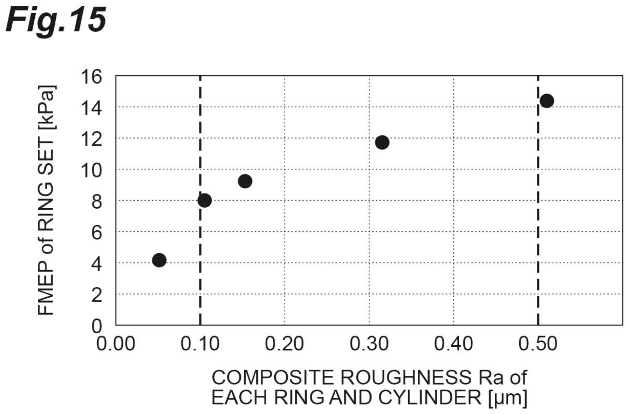

For example, the composite roughness Ra may be Ra 0.1 $\mu$m or more and Ra 0.5 $\mu$m or less. FIG. 15 is a graph illustrating a relationship between the composite roughness of the outer peripheral surfaces of the plurality of piston rings of FIG. 1 and the inner peripheral surface of the cylinder of FIG. 1, and an average oil film thickness. The horizontal axis of FIG. 15 is the composite roughness Ra, and the vertical axis is FMEP (Friction Mean Effective Pressure) of a ring set of the plurality of piston rings. As shown in FIG. 15, when the composite roughness Ra is Ra 0.1 $\mu$m or more and Ra 0.5 $\mu$m or less, minute contact (asperity contact) with the inner peripheral surface 4 of the cylinder is likely to occur due to the roughness of the outer peripheral surface of the piston ring 1, and the FMEP (that is, frictional force) of the outer peripheral surface of the piston ring 1 tends to be high. As a result, frictional heat is likely to be generated, and the phenomenon in which film-like molybdenum disulfide or the like is formed from the organomolybdenum-based friction modifier at the sliding contact portion is more likely to be exhibited.

In the above embodiment, for all of the top ring 10, the second ring 20, and the oil ring 30, the shape of the outer peripheral surface of the piston ring that is effective for reduction in friction and wear even in a situation where the piston sliding speed is low is adopted, but the present disclosure is not limited to this example. Such an outer peripheral surface shape may be adopted for at least one piston ring 1 among the top ring 10, the second ring 20, and the oil ring 30. For example, for the compression ring of the top ring and/or the second ring, the outer peripheral surface shape as in the above embodiment and modifications may be adopted, and for the oil ring, a known outer peripheral surface shape may be adopted. Alternatively, for the oil ring, the outer peripheral surface shape as in the above embodiment and modifications may be adopted, and for at least one of the compression rings of the top ring and the second ring, a known outer peripheral surface shape may be adopted.

In the above embodiment, for all of the top ring 10, the second ring 20, and the oil ring 30, a chromium-containing film is formed on the outer peripheral surface of the piston ring 1, but the present disclosure is not limited to this example. For at least one of the top ring 10, the second ring 20, and the oil ring 30, a film other than chromium (for example, a DLC film) may be formed. When the outer peripheral surface shape as in the above embodiment and modifications is adopted for the oil ring 30, a chromium-containing film may be formed on the outer peripheral surface of the oil ring 30. In this case, due to the presence of chromium on the outer peripheral surface of the oil ring 30, which tends to have a higher surface pressure against the inner peripheral surface 4 of the cylinder among the plurality of piston rings 1, the phenomenon in which film-like molybdenum disulfide or the like is formed from the organomolybdenum-based friction modifier at the sliding contact portion of the oil ring 30 is likely to be exhibited effectively.

In the above embodiment, for example, in the case of the top ring 10, the curved surface 16 is, for example, an arcuate surface having, as both ends, a radially outer end of the side surface 12 and a radially outer end of the side surface 13, but the present disclosure is not limited to this example, and the shape of the outer peripheral surface away from the sliding contact portion may be modified. For example, a connecting surface including an arcuate surface, a linear tapered surface, or the like, different from the curved surface 16 may be interposed between an upper end of the curved surface 16 and a radially outer end of the side surface 12. A connecting surface including an arcuate surface, a linear tapered surface, or the like, different from the curved surface 16 may be interposed between a lower end of the curved surface 16 and a radially outer end of the side surface 13. The same applies to the other piston rings 1.

In the above embodiment, the oil ring 30 is a three-piece oil control ring, but it may be a two-piece oil control ring.

In the above embodiment, the side surfaces 22 and 23 of the second ring 20 are substantially orthogonal to the inner peripheral surface 24, but the present disclosure is not limited to this example. For example, the second ring may have a configuration including an inner cut surface so as to cut out a corner where the side surfaces 22 and 23 and the inner peripheral surface 24 intersect (a so-called inner bevel shape).

The side surfaces 12 and 13 of the top ring 10 are substantially orthogonal to the inner peripheral surface 14, but the present disclosure is not limited to this example. For example, the top ring may have a configuration including an inner cut surface so as to cut out a corner where the side surfaces 12 and 13 and the inner peripheral surface 14 intersect (a so-called inner bevel shape). The top ring may also have a configuration including a balance cut surface so as to cut out a corner where the side surfaces 12 and 13 and the outer peripheral surfaces 15 and 15A intersect (a so-called balance cut shape).

## Reference Signs List

1 : piston ring; 2 : ring groove; 3 : piston; 4 : inner peripheral surface of the cylinder; 10, 10A : top ring (compression ring); 15, 15A, 25, 25A, 25B, 35, 35A, 35B, 36 : outer peripheral surface; 15M, 25M, 35M : central portion; 16, 16A, 37 : curved surface; 17, 17A, 28, 38 : vertex; 20, 20A, 20B : second ring (compression ring); 30, 30A, 30B : oil ring; 100 : sliding mechanism.

## Claims

1. A sliding mechanism between a piston and an inner peripheral surface of a cylinder, to be applied to an engine configured to conduct a temporary stop automatically,

   wherein a lubricating oil of the engine contains an organomolybdenum-based friction modifier,
   wherein the sliding mechanism comprises a plurality of piston rings installed respectively in a plurality of ring grooves of the piston,
   wherein the plurality of piston rings include a compression ring having an annular shape and an oil ring having an annular shape,
   wherein each of a pair of outer peripheral surfaces of the oil ring comprises a curved surface having a cross-sectional shape curving convexly outward in a radial direction,

   wherein a vertex that is a radially outermost point of the curved surface of the oil ring is disposed at a central portion of the outer peripheral surface of the oil ring in an axial direction of the oil ring, and
   wherein the curved surface of the oil ring forms an arcuate surface passing through a pair of points each spaced apart from the vertex of the oil ring by 0.075 mm on both sides in the axial direction of the oil ring and positioned inward in the radial direction at a drop of 10 $\mu$m or more; and
   wherein an outer peripheral surface of the compression ring is configured as in (1) or (2) below:

   (1) the outer peripheral surface of the compression ring protrudes outward in the radial direction, and
   a vertex that is a radially outermost point of the outer peripheral surface of the compression ring is disposed on a side of bottom dead center of the piston relative to a central portion of the outer peripheral surface of the compression ring in an axial direction of the compression ring.
   (2) the outer peripheral surface of the compression ring includes a curved surface having a cross-sectional shape curving convexly outward in the radial direction,

   a vertex that is a radially outermost point of the curved surface of the compression ring is disposed at a central portion of the outer peripheral surface of the compression ring or on a side of bottom dead center of the piston relative to the central portion of the compression ring in an axial direction of the compression ring, and
   the curved surface of the compression ring forms an arcuate surface passing through a pair of points each spaced apart from the vertex of the compression ring by 0.3 mm on both sides in the axial direction of the compression ring and positioned inward in the radial direction at a drop of 2 $\mu$m or more.

2. The sliding mechanism according to claim 1, wherein a chromium-containing film is formed on the outer peripheral surface of the compression ring and the outer peripheral surface of the oil ring.

3. The sliding mechanism according to claim 1 or 2, wherein a total surface pressure of the plurality of piston rings against the inner peripheral surface of the cylinder is 0.85 MPa or more and 5.5 MPa or less.

4. The sliding mechanism according to claim 1 or 2, wherein a composite roughness between the outer peripheral surface of the compression ring, the outer peripheral surface of the oil ring, and the inner peripheral surface of the cylinder is Ra 0.1 μm or more and Ra 0.5 μm or less.

5. A sliding mechanism between a piston and an inner peripheral surface of a cylinder, to be applied to an engine configured to conduct a temporary stop automatically,

wherein a lubricating oil of the engine contains an organomolybdenum-based friction modifier, wherein the sliding mechanism comprises a plurality of piston rings installed respectively in a plurality of ring grooves of the piston, wherein the plurality of piston rings include a compression ring having an annular shape, the compression ring having an outer peripheral surface configured as in (1) or (2) below:

(1) the outer peripheral surface of the compression ring protrudes outward in a radial direction, and
a vertex that is a radially outermost point of the outer peripheral surface of the compression ring is disposed on a side of bottom dead center of the piston relative to a central portion of the outer peripheral surface of the compression ring in an axial direction of the compression ring.
(2) the outer peripheral surface of the compression ring includes a curved surface having a cross-sectional shape curving convexly outward in the radial direction,

a vertex that is a radially outermost point of the curved surface of the compression ring is disposed at a central portion of the outer peripheral surface of the compression ring or on a side of bottom dead center of the piston relative to the central portion of the compression ring in an axial direction of the compression ring, and
the curved surface of the compression ring forms an arcuate surface passing through a pair of points each spaced apart from the vertex of the compression ring by 0.3 mm on both sides in the axial direction of the compression ring and positioned inward in the radial direction at a drop of 2 μm or more.

6. A sliding mechanism between a piston and an inner peripheral surface of a cylinder, to be applied to an engine configured to conduct a temporary stop automatically,

wherein a lubricating oil of the engine contains an organomolybdenum-based friction modifier, wherein the sliding mechanism comprises a plurality of piston rings installed respectively in a plurality of ring grooves of the piston,
wherein the plurality of piston rings include an oil ring having an annular shape, the oil ring having a pair of outer peripheral surfaces,
wherein each of the pair of outer peripheral surfaces of the oil ring comprises a curved surface having a cross-sectional shape curving convexly outward in a radial direction,
wherein a vertex that is a radially outermost point of the curved surface of the oil ring is disposed at a central portion of the outer peripheral surface of the oil ring in an axial direction of the oil ring, and
wherein the curved surface of the oil ring forms an arcuate surface passing through a pair of points each spaced apart from the vertex of the oil ring by 0.075 mm on both sides in the axial direction of the oil ring and positioned inward in the radial direction at a drop of 10 μm or more.

7. The sliding mechanism according to claim 6, wherein a chromium-containing film is formed on the outer peripheral surface of the oil ring.

*Fig.1*

*Fig.2*

**Fig.3**

20(1)

22                   26a

26

25

24                  25M

28

27

23     21

D2

# Fig.4

(a)

30(1)

31 33 35

31a

30X

34

(b)

31

D3

33

38(35M)

Lh2

35

37

34

32

32a

36

*Fig.5*

*Fig.6*

## Fig.7

## Fig.8

Fig.9

## Fig.10

**Fig.11**

*Fig.12*

(a)

(b)

## Fig.13

Fig.14

*Fig.15*

# EP 4 650 587 A1

## INTERNATIONAL SEARCH REPORT

| International application No. |
|---|
| **PCT/JP2023/003086** |

### A. CLASSIFICATION OF SUBJECT MATTER

*F02F 5/00*(2006.01)i
FI:   F02F5/00 301B; F02F5/00 R

According to International Patent Classification (IPC) or to both national classification and IPC

### B. FIELDS SEARCHED

Minimum documentation searched (classification system followed by classification symbols)

F02F5/00; F16J9/00-9/28

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | WO 2022/168668 A1 (TPR CO., LTD.) 11 August 2022 (2022-08-11) paragraphs [0005], [0023]-[0028], [0035], [0038], fig. 1, 3 | 1-7 |
| Y | JP 2020-045530 A (TOYOTA JIDOSHA KABUSHIKI KAISHA) 26 March 2020 (2020-03-26) paragraphs [0005], [0015] | 1-7 |
| Y | JP 2021-095957 A (RIKEN CORP.) 24 June 2021 (2021-06-24) paragraphs [0021]-[0022] | 1-7 |
| Y | Microfilm of the specification and drawings annexed to the request of Japanese Utility Model Application No. 156884/1982 (Laid-open No. 062358/1984) (RIKEN CORP.) 24 April 1984 (1984-04-24), specification, page 4, line 2 to page 5, line 3, drawings | 1-4, 6-7 |
| Y | JP 2018-115752 A (HONDA MOTOR CO., LTD.) 26 July 2018 (2018-07-26) paragraph [0049], fig. 9 | 1-4, 6-7 |
| Y | JP 2021-059983 A (NIPPON PISTON RING CO., LTD.) 15 April 2021 (2021-04-15) paragraphs [0112]-[0116] | 3 |

☑ Further documents are listed in the continuation of Box C.    ☑ See patent family annex.

| | |
|---|---|
| *   Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **06 April 2023** | **18 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

30

## INTERNATIONAL SEARCH REPORT

| International application No. |
| --- |
| **PCT/JP2023/003086** |

### C.    DOCUMENTS CONSIDERED TO BE RELEVANT

| Category* | Citation of document, with indication, where appropriate, of the relevant passages | Relevant to claim No. |
| --- | --- | --- |
| Y | WO 2019/008780 A1 (TPR CO., LTD.) 10 January 2019 (2019-01-10) paragraphs [0076], [0108] | 4 |
| A | JP 2020-041573 A (RIKEN CORP.) 19 March 2020 (2020-03-19) paragraphs [0042], [0069] | 1, 5 |

Form PCT/ISA/210 (second sheet) (January 2015)

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| WO | 2022/168668 | A1 | 11 August 2022 | (Family: none) | | | |
| JP | 2020-045530 | A | 26 March 2020 | (Family: none) | | | |
| JP | 2021-095957 | A | 24 June 2021 | (Family: none) | | | |
| JP | 59-062358 | U1 | 24 April 1984 | (Family: none) | | | |
| JP | 2018-115752 | A | 26 July 2018 | (Family: none) | | | |
| JP | 2021-059983 | A | 15 April 2021 | (Family: none) | | | |
| WO | 2019/008780 | A1 | 10 January 2019 | BR | 112018008622 | A2 | |
| | | | | CN | 109416124 | A | |
| | | | | EP | 3453927 | A1 | |
| | | | | JP | 6251850 | B1 | |
| | | | | MX | 2018006975 | A | |
| | | | | US | 2019/0360585 | A1 | |
| | | | | paragraphs [0125], [0164] | | | |
| JP | 2020-041573 | A | 19 March 2020 | WO | 2020/050336 | A1 | |

Form PCT/ISA/210 (patent family annex) (January 2015)

**EP 4 650 587 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014532841 W
- JP 2018150434 A